# EUROPÄISCHE PATENTSCHRIFT

(11) **EP 2 737 292 B1**
(45) Veröffentlichungstag und Bekanntmachung des Hinweises auf die Patenterteilung: **23.03.2016**
(21) Anmeldenummer: 11766966.3
(22) Anmeldetag: 30.09.2011
(51) Int. Cl.: G01M 13/04

(54) **VERFAHREN UND ANORDNUNG ZUM ERMITTELN UND/ODER ÜBERWACHEN DES ZUSTANDS EINES WÄLZLAGERS**
METHOD AND ARRANGMENT FOR DETERMINING AND/OR MONITORING THE STATE OF A ROLLER BEARING
PROCÉDÉ ET DISPOSITIF POUR DÉTERMINER ET/OU SURVEILLER L'ÉTAT D'UN ROULEMENT

(43) Veröffentlichungstag der Anmeldung: 04.06.2014
(73) Patentinhaber: Siemens Aktiengesellschaft, 80333 München (DE)
(72) Erfinder: GATTERMANN, Sven, 90513 Zirndorf (DE); KLOS, Hans-Henning, 90537 Feucht (DE); MÜLLER, Klaus-Dieter, 90425 Nürnberg (DE); TISCHMACHER, Hans, 91207 Lauf (DE)
(86) Internationale Anmeldenummer: PCT/EP2011/067078
(87) Internationale Veröffentlichungsnummer: WO 2013/044973

(56) Entgegenhaltungen:
- EP-A1- 2 053 375
- WO-A1-2010/009750
- DE-A1- 4 017 449

## Beschreibung

Die Erfindung betrifft ein Verfahren und eine Anordnung zum Ermitteln und/oder Überwachen des Zustands eines Wälzlagers gemäß Oberbegriff des Patentanspruchs 1 bzw. 8. Die Erfindung betrifft ferner ein System zum Ermitteln und/oder Überwachen des Zustands einer Maschine mit zumindest zwei derartigen Anordnungen gemäß Patentanspruch 16.

Aus der WO 2010/009750 A1 ist es bereits bekannt, zum Ermitteln und/oder Überwachen des Zustands eines Wälzlagers bei dessen Betrieb ein Sensorsignal in Form eines Schallemissionssignals in einem Frequenzband im Ultraschallbereich zu erfassen. Dabei wird aus der Signal form des Sensorsignals ein Kennwert für eine gerade erfolgende oder bereits erfolgte Schädigung des Wälzlagers ermittelt und durch einen Vergleich mit einem Referenzwert der Zustand des Wälzlagers ermittelt. Zur Ermittlung des Kennwertes wird dabei das Produkt aus Maximalwert und Effektivwert des jeweiligen Sensorsignals ermittelt.

Aus der EP 2 053 375 A und der DE 40 17 449 A1 sind Verfahren zur Diagnose von Wälzlagern bekannt, bei denen im Rahmen einer normalen Schwingungsüberwachung im Körperschallbereich bis ca. 20 kHz auch Impulse ausgewertet werden, um Lagerschäden zu detektieren.

Der vorliegenden Erfindung liegt die Aufgabe zugrunde, mit einem Verfahren gemäß Oberbegriff des Patentanspruchs 1 Schädigungen an einem Wälzlager noch frühzeitiger zu verhindern. Darüber hinaus liegt der Erfindung die Aufgabe zugrunde, eine Anordnung anzugeben, die ein solches Verfahren unterstützt. Weiterhin soll ein besonders vorteilhaftes System zum Ermitteln und/oder Überwachen des Zustands einer Maschine mit mehreren Wälzlagern unter Verwendung erfindungsgemäßer Anordnungen angegeben werden.

Die auf das Verfahren gerichtete Aufgabe gelingt durch ein Verfahren, bei dem beim Betrieb des Wälzlagers ein Sensorsignal in Form eines Schallemissionssignals in einem Frequenzband im Ultraschallbereich erfasst und Stoßimpulse in dem Schallemissionssignal ermittelt werden.

Die Erfindung geht hierbei von der Erkenntnis aus, dass elektrische Ströme durch das Wälzlager, wie sie beispielweise bei umrichtergespeisten Elektromotoren aufgrund von Spannungs-Potenzialdifferenzen zwischen dem Innen- und dem Außenring des Lagers auftreten können, zur Zündung eines Lichtbogens führen können, wenn die Durchschlagspannung des Schmierfilms des Lagers überschritten ist. Bei höheren Durchschlagsenergien kommt es zu einer sogenannten Riffelbildung durch Verdampfung von Material der Laufbahn. Dabei bildet sich in der Laufbahn eine Berg- und Talstruktur, die zu erhöhten Lagerschwingungen, Lagergeräuschen und schließlich zu einem vorzeitigen Lagerausfall führt.

Das Verdampfungsereignis ist jedoch mit einem akustischen Stoßimpuls verbunden, der mit einem Sensor in einem Frequenzband im Ultraschallbereich erfasst werden kann. Durch Ermittlung der Stoßimpulse können somit auf einfache Weise schädliche Lagerströme frühzeitig detektiert und somit Schädigungen des Lagers frühzeitig vermieden werden. Dies kann sowohl bei einem Betrieb des Wälzlagers während einer Inbetriebsetzungsphase oder bei dem danach stattfindenden laufenden Betrieb erfolgen.

Unter "Schallemission", die im englischsprachigen als "Acoustic Emission (AE)" bezeichnet wird, wird hierbei eine Erscheinung verstanden, bei der elastische Wellen durch eine stoßartige Anregung aufgrund einer plötzlichen Freisetzung von Energie innerhalb eines Festkörpers erzeugt werden. Entsprechende Schallemissionssignale, die sich in Form von Körperschall in dem Festkörper ausbreiten, treten üblicherweise in einem Frequenzbereich von etwa 80 kHz bis zu 1 MHz auf.

Wie sich herausgestellt hat, treten Stoßimpulse, die auf Lagerströmen beruhen, vor allem in einem Frequenzbereich von etwa 80 kHz bis zu 150 kHz auf und werden zur Detektion der Lagerströme bevorzugt auch in diesem Frequenzbereich ermittelt.

Wie sich ebenfalls herausgestellt hat, liegt die Zeitdauer der von dem Lager erzeugten und ausgehenden Stoßimpulse, die auf Lagerströmen beruhen (im Folgenden auch als "Quellimpulse" bezeichnet), im Bereich von einigen Mikrosekunden bis wenigen Millisekunden. Bevorzugt werden deshalb zur Detektion der Lagerströme Stoßimpulse mit einer Zeitdauer im Bereich von 1 µs bis 10 ms ermittelt. Die genaue Zeitdauer hängt von der örtlichen Größe der Materialumwandlung bzw. Schädigung ab. Der Quellimpuls ist direkt proportional zum Durchmesser der Materialveränderung und indirekt proportional zur Schallgeschwindigkeit im Material. Dabei ist aber auch zu berücksichtigen, dass bei einer Ausbreitung einer Körperschallwelle im Material Reflexion, Brechung, Dispersion usw. stattfindet, welche die durch den Sensor aufgenommene Wellenform im Vergleich zur Wellenform direkt an der Quelle verändern. Zusätzlich wird die Wellenform durch die Sensorübertragungsfunktion geändert, insbesondere schwingen resonante Körperschallsensoren nach, d.h. die Impulse werden durch die Eigenresonanz des Sensors verlängert. Bei bekannter Sensorübertragungsfunktion kann für eine Sprungfunktion die Sensorantwort und somit das Ausschwingverhalten des Sensors berechnet werden. Detektierte Impulse, die zeitlich kürzer als dieses Ausschwingverhalten sind, rühren dann nicht von Schallemissionsquellen her, sondern vielmehr von elektromagnetischen Störungen der Elektronik oder ähnlichem. Solche zeitlich zu kurzen Impulse werden bevorzugt nicht betrachtet bzw. herausgefiltert.

Gemäß einer weiteren besonders vorteilhaften Ausgestaltung werden zur Detektion der Lagerströme Stoßimpulse ermittelt, bei denen eine Anstiegszeit kleiner ist als eine Abfallszeit. Hierbei liegt die Erkenntnis zugrunde, dass die durch Lagerströme erzeugten Körperschallimpulse bedingt durch die plastische Materialverformung des Festkörpers eine relativ kurze Anstiegszeit und bedingt durch das elastische Ausschwingen der Materialteilchen eine vergleichsweise längere Abfallzeit aufweisen.

Gemäß einer vorteilhaften Ausgestaltung des Verfahrens werden die ermittelten Stoßimpulse gezählt. Aus der absoluten Anzahl der Stoßimpulse kann dann auf die Anzahl der Durchschläge und hierdurch auf die Belastung des Lagers durch Lagerströme sowie auf den Grad der bereits eingetretenen Schäden im Lager geschlossen werden. Dabei werden bevorzugt Stoßimpulse ermittelt und gezählt, bei denen die Amplitude deutlich über dem Sensorrauschen liegt. Eine besonders genaue Darstellung der Lagerstromimpulse lässt sich mittels eines Histogramms durchführen. Hierbei wird die Häufigkeit über der (maximalen) Stoßimpulsamplitude dargestellt. Eine hohe Anzahl von Stößen mit hoher Amplitude bedeutet hierbei eine starke Schädigung. Außerdem kann ebenso wie die Impulsamplitude auch die Impulsdauer als charakteristisches Merkmal zur Klassifikation der Materialschädigung eingesetzt werden. Außerdem können die Impulse durch eine Charakterisierung der Impulse mit einer mittleren Amplitude pro Zeiteinheit (z.B. Sekunde) in verschiedene Amplitudenklassen klassifiziert werden.

Da bei dem Verfahren insbesondere die Schädigungen einzeln ausweisbar detektiert werden, kann eine Zustandsbestimmung des Lagers von Vorteil durch eine Summation aller Impulse (vorzugsweise in einem Histogramm) über den gesamten Lebenszeitraum des Lagers erfolgen. Analog zu den Amplituden ist auch der RMS (=root-mean-square)-Wert der Impulse ein geeignetes Mittel, um die Impulse in ihrem Energieinhalt zu charakterisieren. Der RMS-Wert kann analog zu den (maximalen) Amplituden zur Zustandsbestimmung des Lagers verwendet werden.

Eine genaue Aussage über die Lagerbelastung durch Lagerströme kann dadurch gewonnen werden, dass eine Anzahl und/oder eine mittlere Amplitude der Stoßimpulse über eine definierte Zeitdauer, d.h. eine "Stoßimpulsrate" bzw. eine "mittlere Stoßimpulsamplitude", ermittelt und mit einem Referenzwert verglichen wird. Das Ergebnis dieses Vergleichs kann dann beispielsweise auf einer Ausgabeeinheit, wie z.B. einem Monitor, ausgegeben werden. Wie sich herausgestellt hat, ist der Referenzwert dabei nicht von der Drehzahl, sondern vom Schmierspalt und der Schmierspaltänderung im Lager abhängig.

Wenn die Anzahl der Stoßimpulse über der definierten Zeitdauer den Referenzwert übersteigt, kann auch ein Alarmsignal ausgegeben werden.

Lagerströme als Ursache eines Stoßimpulses lassen sich dabei besonders einfach dadurch ermitteln, dass neben den Stoßimpulsen auch mittels eines Lagerstromsensors die Lagerströme gemessen werden und das zeitliche Auftreten von Schallemissions-Impulsen mit dem zeitlichen Auftreten von elektromagnetischen Lagerstromimpulsen verglichen wird. Bei der Lagerstromschädigung liefern beide Messverfahren eine erhöhte Häufigkeit von Impulsen mit hohen Amplituden, was sich beispielsweise durch eine Darstellung jeweils als Histogramm abbilden und vergleichen lässt.

Aus dem gleichen Sensorsignal kann zusätzlich entsprechend des in der WO 2010/009750 A1 beschriebenen Verfahrens auch noch ein Kennwert für eine bereits erfolgte oder gerade erfolgende mechanische Schädigung des Wälzlagers, wie z.B. eine Pittingbildung, ermittelt und unter Durchführung eines Vergleichs mit einem von der Drehzahl des Wälzlagers abhängigen Referenzwert ein mechanischer Schädigungszustand des Wälzlagers ermittelt werden. Durch die kombinierte Erfassung und Auswertung des Sensorsignals wird eine besonders aussagekräftige Bestimmung des Zustands des Wälzlagers möglich. Damit wird eine noch bessere Planbarkeit von Instandsetzungsmaßnahmen und -zeitpunkten möglich.

Eine besonders einfache Bestimmung des Kennwerts ist dadurch möglich, dass zur Ermittlung des Kennwerts das Produkt aus Maximalwert und Effektivwert des jeweiligen Sensorsignals ermittelt wird.

Die Lösung der auf die Anordnung gerichteten Aufgabe gelingt erfindungsgemäß durch eine Anordnung zum Ermitteln und/oder Überwachen des Zustands eines Wälzlagers in seinem Betrieb, die einen Sensor zum Erfassen eines Sensorsignales in Form eines Schallemissionssignals in einem Frequenzband im Ultraschallbereich und ein Signalverarbeitungsmittel zum Ermitteln von Stoßimpulsen in dem Sensorsignal umfasst. Durch Ermittlung der Stoßimpulse können somit auf einfache Weise schädliche Lagerströme frühzeitig detektiert und somit Schädigungen des Lagers frühzeitig vermieden werden.

Die für das erfindungsgemäße Verfahren genannten Überlegungen, Erkenntnisse und Vorteile gelten entsprechend auch für die erfindungsgemäße Anordnung. Gleiches gilt hinsichtlich im Folgenden aufgeführter bevorzugter Weiterbildungen der erfindungsgemäßen Anordnung jeweils in Bezug auf die entsprechenden Weiterbildungen des erfindungsgemäßen Verfahrens.

Bevorzugt ist das Signalverarbeitungsmittel derart ausgebildet, dass Stoßimpulse ermittelbar sind, die in einem Frequenzbereich von 80 kHz bis 150 kHz liegen.

Weiterhin ist das Signalverarbeitungsmittel vorzugsweise derart ausgebildet, dass Stoßimpulse mit einer Zeitdauer im Bereich von 1 µs bis 10 ms ermittelbar sind.

In einer weiteren vorteilhaften Ausgestaltung ist das Signalverarbeitungsmittel derart ausgebildet, dass Stoßimpulse ermittelbar sind, bei denen eine Anstiegszeit kleiner ist als eine Abfallszeit.

In einer vorteilhaften Ausgestaltung weist die Anordnung einen Zähler zum Zählen der ermittelten Stoßimpulse auf.

Gemäß einer weiteren vorteilhaften Ausgestaltung umfasst die Anordnung eine Auswerteeinrichtung zur Durchführung eines Vergleichs zwischen einer Anzahl und/oder einer mittleren Amplitude der Stoßimpulse über einer definierten Zeitdauer mit einem Referenzwert.

Von Vorteil ist dabei die Auswerteeinrichtung zum Ausgeben eines Alarmsignales auszubilden, wenn die Anzahl der Stoßimpulse und/oder die mittlere Amplitude über der definierten Zeitdauer den Referenzwert übersteigen.

Die Auswerteeinheit kann dabei auch mit einem Conditioning-Monitoring-System koppelbar sein. Hierdurch kann der ermittelte Zustand des Wälzlagers in eine übergeordnete Planung von Instandsetzungsmaßnahmen und -zeitpunkten einfließen.

Für eine zuverlässige und trotzdem konstruktiv einfache Erfassung der Schallemissionssignale ist der Sensor vorzugsweise als ein piezoelektrischer, piezoresistiver, kapazitiver oder induktiver Sensor realisiert.

Unter Nutzung des gleichen Sensors kann die Anordnung zusätzlich entsprechend der in der WO 2010/009750 A1 beschriebenen Anordnung auch noch ein weiteres Signalverarbeitungsmittel zum Ermitteln eines Kennwertes für eine bereits erfolgte oder gerade erfolgende mechanische Schädigung des Wälzlagers aus dem ersten Sensorsignal und die Auswerteeinrichtung zusätzlich noch zum Ermitteln des mechanischen Schädigungszustandes des Wälzlagers unter Durchführung eines Vergleichs des Kennwertes mit einem von der Drehzahl des Wälzlagers abhängigen Referenzwert umfassen.

Ein erfindungsgemäßes System zum Ermitteln und/oder Überwachen des Zustands einer Maschine mit mehr als zwei Wälzlagern umfasst zumindest zwei, insbesondere genau zwei, vorstehend beschrieben Anordnungen, wobei die Sensoren der Anordnungen an unterschiedlichen Stellen an oder in der Maschine angebracht sind und wobei die Anzahl der Anordnungen kleiner ist als die Anzahl der Wälzlager. Durch einen Vergleich der Amplituden und/oder der Erfassungszeiten (bzw. Laufzeiten) der Stoßimpulse ist mit relativ wenigen, insbesondere nur zwei, Sensoren und zugeordneten Signalverarbeitungsmitteln ein Rückschluss auf den Ort der Erzeugung des Stoßimpulses und somit auf das jeweilige Wälzlager möglich. Es können somit mit nur wenigen derartiger Anordnungen, vorzugsweise mit nur zwei, eine größere Anzahl von Lagern in einer Maschine auf Lagerströme überwacht werden.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: eine erfindungsgemäße Anordnung zum Ermitteln und/oder Überwachen des Zustands eines Wälzlagers und
- FIG 2: ein erfindungsgemäßes System zum Ermitteln und/oder Überwachen des Zustands einer Maschine mit mehr als zwei Wälzlagern.

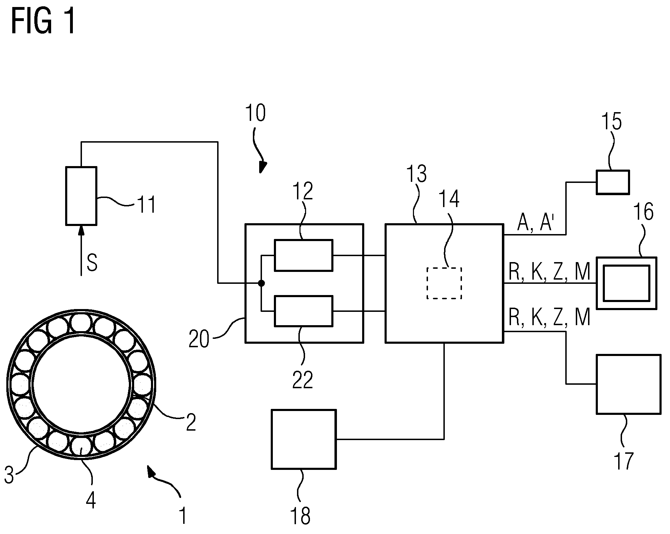

Ein in FIG 1 gezeigtes Wälzlager 1 weist in einer für den Fachmann bekannten Weise einen Innenring 2, einen Außenring 3 und zwischen diesen beiden Ringen angeordnete Wälzkörper 4 (z.B. Kugeln oder Rollen) auf.

Eine Anordnung 10 dient zum Ermitteln und/oder Überwachen des Zustands des Wälzlagers 1 in seinem Betrieb. Die Anordnung 10 umfasst einen Sensor 11 zum Erfassen eines Sensorsignales S in Form eines Schallemissionssignals in einem Frequenzband im Ultraschallbereich und ein mit dem Sensor 11 verbundenes Signalverarbeitungsmittel 12 zum Ermitteln von Stoßimpulsen in dem Sensorsignal S.

Der Sensor 11 ist vorzugsweise als ein piezoelektrischer, piezoresistiver, kapazitiver oder induktiver Sensor realisiert und kann entweder am Außenring 3 oder am Innenring 2 befestigt sein, in das Lager 1 integriert oder auch in der Nähe des Lagers mit guter mechanischer Kopplung befestigt sein.

Zur Detektion von Stoßimpulsen, die auf elektrischen Strömen durch das Lager 1 beruhen, ist das Signalverarbeitungsmittel 12 derart ausgebildet, dass Stoßimpulse ermittelbar sind, die in einem Frequenzbereich von 80 kHz bis 150 kHz liegen, die eine Zeitdauer im Bereich von 1 µs bis 10 ms aufweisen und bei denen eine Anstiegszeit kleiner ist als eine Abfallszeit. Das Signalverarbeitungsmittel 12 ist dabei beispielsweise in Form eines integrierten elektrischen Schaltkreises ausgeführt.

Das Signalverarbeitungsmittel 12 berücksichtigt dabei, dass die Impulse durch die Eigenresonanz des Sensors 11 verlängert werden. Bei bekannter Sensorübertragungsfunktion kann für eine Sprungfunktion die Sensorantwort und somit das Ausschwingverhalten des Sensors berechnet werden. Detektierte Impulse, die zeitlich kürzer als dieses Ausschwingverhalten sind, rühren dann nicht von Schallemissionsquellen her, sondern vielmehr von elektromagnetischen Störungen der Elektronik oder ähnlichem. Solche zeitlich zu kurzen Impulse werden von dem Signalverarbeitungsmittel 12 nicht betrachtet bzw. herausgefiltert.

Weiterhin umfasst die Anordnung 10 eine Auswerteeinrichtung 13 zur Ermittlung der jeweils maximalen Amplitude der Stoßimpulse, zur Ermittlung der Anzahl der Stoßimpulse über einer definierten Zeitdauer, d.h. einer Stoßimpulsrate, und zur Ermittlung der mittleren Amplitude über der definierten Zeitdauer, d.h. einer mittleren Stoßimpulsamplitude.

Die Auswerteeinrichtung 13 dient auch zum Vergleichen der Stoßimpulsrate und der mittleren Stoßimpulsamplitude mit jeweils einem Referenzwert.

Die Auswerteeinrichtung 13 umfasst hierzu einen oder mehrere Zähler 14 zum Zählen der von dem Signalverarbeitungsmittel 12 ermittelten Stoßimpulse, vorzugsweise getrennt für verschiedene Amplitudenbereiche (d.h. Amplitudenklassen) und Bereiche für die Zeitdauern der Impulse (d.h. Zeitdauerklassen).

Die Auswerteeinrichtung 13 ist weiterhin zum Ausgeben eines Alarmsignales A ausgebildet, wenn die Anzahl der Stoßimpulse oder die mittlere Stoßimpulsamplitude über der definierten Zeitdauer den jeweiligen Referenzwert übersteigt.

Die Auswerteeinrichtung 13 ist hierzu mit einem Alarmgeber 15 (z.B. einem optischen oder akustischen Signalgeber) verbunden, über den das Alarmsignal A ausgebbar ist.

Beim Betrieb des Wälzlagers 1 werden durch elektrische Lagerströme Durchschläge in dem Lager 1 und hierdurch wiederum stoßimpulsförmige Schallemissionssignale im Ultraschallbereich in einem Frequenzbereich von 80 kHz bis 150 kHz erzeugt. Durch den Sensor 11 wird eine Sensorsignal S in Form eines Schallemissionssignals, das diese Stoßimpulse enthält, im Ultraschallbereich erfasst.

Durch die Signalverarbeitungsmittel 12 werden die Stoßimpulse in dem Sensorsignal S ermittelt. Die von dem Signalverarbeitungsmittel 12 ermittelten Stoßimpulse werden, ggf. jeweils separat für verschiedene Amplituden- und/oder Zeitdauerbereiche, in dem Zähler 14 der Auswerteeinrichtung 13 gezählt. Das Ergebnis Z dieser Zählung wird auf dem Monitor 16 ausgegeben.

Außerdem wird durch die Auswerteeinrichtung 13 die Anzahl der Stoßimpulse und eine mittlere Amplitude der Stoßimpulse über eine definierte Zeitdauer (z.B. pro Minute), d.h. eine "Stoßimpulsrate" R und eine mittlere Stoßimpulsamplitude M ermittelt und ebenfalls auf dem Monitor 16 ausgegeben.

Weiterhin werden von der Auswerteeinrichtung 13 die über die definierte Zeitdauer ermittelte Anzahl der Stoßimpulse und die mittlere Stoßimpulsamplitude mit jeweils einem Referenzwert verglichen und ein Alarmsignal A an den Alarmgeber 15 ausgegeben, wenn die Anzahl der Stoßimpulse oder die mittlere Stoßimpulsamplitude über die definierte Zeitdauer den jeweiligen Referenzwert überschreitet.

Analog zu den (Maximal-)Amplituden und Zeitdauern ist auch der RMS-Wert der Impulse ein geeignetes Mittel, um die Impulse in ihrem Energieinhalt zu charakterisieren. Der RMS-Wert kann analog oder ergänzend zu den (Maximal-)Amplituden und Zeitdauern eingesetzt werden.

Ein besonders guter Einblick in den Zustand des Lagers 1 lässt sich mittels eines Histogramms gewinnen. Hierbei wird auf dem Monitor 16 die Häufigkeit der Stoßimpulse über der Stoßimpulsamplitude dargestellt. Eine hohe Anzahl von Stößen mit hoher Amplitude bedeutet hierbei eine starke Schädigung.

Die Ursache bzw. Herkunft eines Impulses lässt sich besonders genau dadurch ermitteln, dass in der Auswerteeinrichtung 13 das zeitliche Auftreten von Schallemissions-Impulsen mit dem Auftreten von elektromagnetischen Lagerstromimpulsen (gemessen durch einen Lagerstromsensor 18) verglichen wird. Bei der Lagerstromschädigung liefern beide Messverfahren eine erhöhte Häufigkeit von Impulsen mit hohen Amplituden, was sich durch die Darstellung jeweils als Histogramm auf dem Monitor 16 abbilden und vergleichen lässt.

Um neben den Lagerströmen zusätzlich noch eine bereits erfolgte oder gerade erfolgende anderweitige Schädigung des Wälzlagers 1 zu ermitteln, umfasst die Anordnung 10 zusätzlich noch ein zweites Signalverarbeitungsmittel 22 zum Ermitteln eines Kennwertes K für eine bereits erfolgte oder gerade erfolgende Schädigung des Wälzlagers 1 aus dem ersten Sensorsignal S. Die Auswerteeinrichtung 13 dient dabei auch zum Ermitteln des Schädigungszustandes des Wälzlagers unter Durchführung eines Vergleichs dieses Kennwertes K mit einem von der Drehzahl des Wälzlagers 1 abhängigen Referenzwert.

Die beiden Signalverarbeitungsmittel 12 und 22 sind dabei in einer einzigen Signalverarbeitungseinrichtung 20 zusammengefasst.

Die Signalverarbeitungseinrichtung 20 und die Auswerteeinrichtung 13 können hierbei in einem einzigen integrierten elektrischen Schaltkreis zusammengefasst sein.

Der Kennwert K kann in der Auswerteeinrichtung 13 auch mit zumindest einem von dem Material, der Größe, der Masse und/oder dem Typ des Wälzlagers 1 abhängigen zweiten Referenzwert verglichen werden.

Bevorzugt wird zur Ermittlung des Kennwertes K das Produkt aus Maximalwert und Effektivwert des Sensorsignals S ermittelt.

Die Auswerteeinrichtung 13 gibt dabei ein Alarmsignal A' an den Alarmgeber 15 aus, wenn der Kennwert K über eine definierte Zeitdauer von dem jeweiligen von der Drehzahl des Wälzlagers 1 abhängigen Referenzwert abweicht.

Außerdem wird durch die Auswerteeinrichtung 13 der Kennwert K auf dem Monitor 16 ausgegeben.

Die Anordnung 10 ist außerdem mit einem Conditioning-Monitoring System 17 gekoppelt und überträgt an dieses die Gesamtzahl Z der Stoßimpulse (ggf. separat für verschiedene Bereiche von Maximalamplituden, Zeitdauern oder RMS-Werte der Stoßimpulse), die Stoßimpulsraten R, die mittleren Stoßimpulsamplituden M und die Kennwerte K.

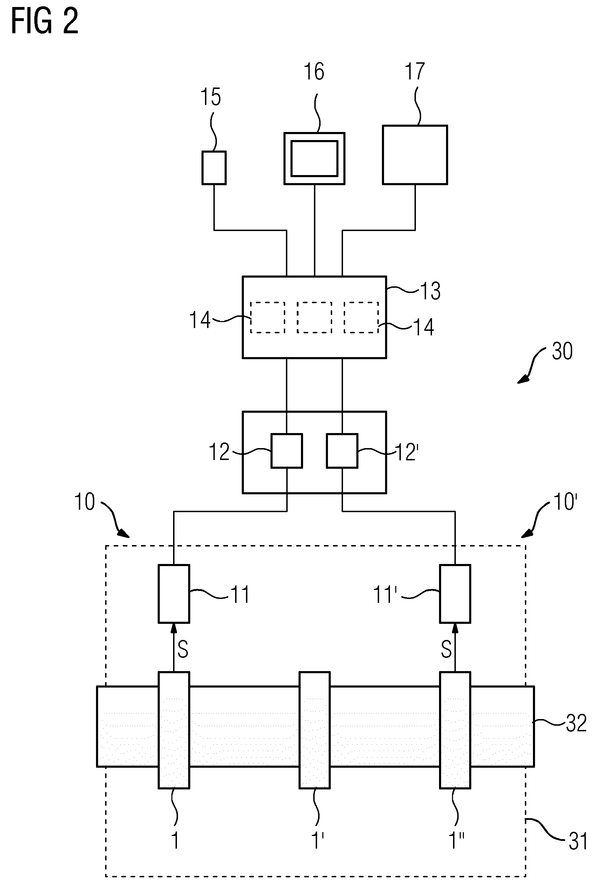

Ein in FIG 2 dargestelltes System 30 zum Ermitteln und/oder Überwachen des Zustands einer Maschine 31 mit einer Welle 32 mit drei Wälzlagern 1, 1', 1" weist zwei Anordnungen 10, 10' mit jeweils einem Sensor 11 bzw. 11' und einem Signalverarbeitungsmittel 12 bzw. 12' wie im Zusammenhang mit FIG 1 beschrieben auf. Die Sensoren 11, 11' sind dabei an unterschiedlichen Stellen an oder in der Maschine 31 angebracht. Die Anzahl der Anordnungen 10, 10' ist dabei kleiner als die Anzahl der Wälzlager 1, 1', 1".

Durch eine Auswertung der Laufzeitverzögerungen zwischen den erfassten Stoßimpulsen und/oder der Amplituden der Stoßimpulse ist ein Rückschluss auf den Ort der Entstehung des Stoßimpulses und somit auf das Wälzlager möglich. Es sind somit zwei Sensoren ausreichend, um den Ort der Entstehung des Stoßimpulses zu ermitteln und die Stoßimpulse somit einem der Lager 1, 1', 1" zuzuordnen.

Hierzu können die Signalverarbeitungsmittel 12, 12' derart ausgebildet sein, dass sie die Amplitude der Stoßimpulse ermitteln, und die Auswerteeinrichtung 13 kann derart ausgebildet sein, dass sie durch einen Vergleich der Amplituden der Stoßimpulse den Ort der Erzeugung der Stoßimpulse ermittelt.

Alternativ kann die Auswerteeinrichtung 13 derart ausgebildet sein, dass sie durch einen Vergleich der Erfassungszeit der Stoßimpulse den Ort der Erzeugung des Stoßimpulses ermittelt.

Die Auswerteeinrichtung 13 dient somit sowohl zur Ermittlung der Stoßimpulse bzw. der Stoßimpulsrate als auch der Zuordnung dieser Stoßimpulse bzw. der Stoßimpulsrate zu einem der Lager 1, 1', 1". Die Auswerteeinrichtung 13 umfasst hierzu für jedes der Lager 1, 1', 1" jeweils einen Zähler 14 für die Stoßimpulse des Lagers 1, 1', 1".

Außerdem ist die Auswerteinrichtung - wie im Zusammenhang mit FIG 1 beschrieben - mit einem Alarmgeber 15, einem Monitor 16 und mit einem Zustandsüberwachungssystem (Conditioning Monitoring System) 17 verbunden.

## Patentansprüche

1. Verfahren zum Ermitteln und/oder Überwachen des Zustands eines Wälzlagers (1), wobei beim Betrieb des Wälzlagers (1) ein Sensorsignal (S) in Form eines Schallemissionssignals in einem Frequenzband im Ultraschallbereich erfasst wird, **dadurch gekennzeichnet, dass** zur Detektion von Lagerströmen Stoßimpulse in dem Sensorsignal (S) ermittelt werden.

2. Verfahren nach Anspruch 1, **dadurch gekennzeichnet, dass** Stoßimpulse in einem Frequenzbereich von 80 kHz bis 150 kHz ermittelt werden.

3. Verfahren nach Anspruch 1 oder 2, **dadurch gekennzeichnet, dass** Stoßimpulse mit einer Zeitdauer im Bereich von 1 µs bis 10 ms ermittelt werden.

4. Verfahren nach einem der Ansprüche 1 bis 3, **dadurch gekennzeichnet, dass** Stoßimpulse ermittelt werden, bei denen eine Anstiegszeit kleiner ist als eine Abfallszeit.

5. Verfahren nach einem der vorhergehenden Ansprüche, **dadurch gekennzeichnet, dass** die ermittelten Stoßimpulse gezählt werden.

6. Verfahren nach einem der vorhergehenden Ansprüche, **dadurch gekennzeichnet, dass** eine Anzahl und/oder eine mittlere Amplitude der Stoßimpulse über eine definierte Zeitdauer ermittelt und mit einem Referenzwert verglichen wird, wobei vorzugsweise ein Alarmsignal (A) ausgegeben wird, wenn die Anzahl der Stoßimpulse und/oder die mittlere Amplitude über der definierten Zeitdauer den Referenzwert übersteigen.

7. Verfahren nach einem der vorhergehenden Ansprüche, **dadurch gekennzeichnet, dass** aus dem Sensorsignals (S) zusätzlich ein Kennwert (K) für eine bereits erfolgte oder gerade erfolgende Schädigung des Wälzlagers (l) ermittelt wird und unter Durchführung eines Vergleichs mit einem von der Drehzahl des Wälzlagers abhängigen Referenzwert ein Schädigungszustand des Wälzlagers (1) ermittelt wird, wobei zur Ermittlung des Kennwerts (K) vorzugsweise das Produkt aus Maximalwert und Effektivwert des Sensorsignals (8) ermittelt wird.

8. Anordnung (10) zum Ermitteln und/oder Überwachen des Zustands eines Wälzlagers (1) in seinem Betrieb, mit einem Sensor (11) zum Erfassen eines Sensorsignales (S) in Form eines Schallemissionssignals in einem Frequenzband im Ultraschallbereich, **dadurch gekennzeichnet, dass** sie zur Detektion von Lagerströmen ein Signalverarbeitungsmittel (12) zum Ermitteln von Stoßimpulsen in dem Sensorsignal (S) umfasst.

9. Anordnung (10) nach Anspruch 8, **dadurch gekennzeichnet, dass** das Signalverarbeitungsmittel (12) derart ausgebildet ist, dass Stoßimpulse ermittelbar sind, die in einem Frequenzbereich von 80 kHz bis 150 kHz liegen.

10. Anordnung (10) nach Anspruch 8 oder 9, **dadurch gekennzeichnet, dass** das Signalverarbeitungsmittel (12) derart ausgebildet ist, dass Stoßimpulse mit einer Zeitdauer im Bereich von 1 µs bis 10 ms ermittelbar sind.

11. Anordnung (10) nach einem der Ansprüche 8 bis 10, **dadurch gekennzeichnet, dass** das Signalverarbeitungsmittel (12) derart ausgebildet ist, dass Stoßimpulse ermittelbar sind, bei denen eine Anstiegszeit kleiner ist als eine Abfallezeit.

12. Anordnung (10) nach einem der Ansprüche 8 bis 11, **gekennzeichnet durch** einen Zähler (14) zum Zählen der ermittelten Stoßimpulse.

13. Anordnung (10) nach einem der Anspruche 8 bis 12, **gekennzeichnet durch** eine Auswerteeinrichtung (13) zur Durchführung eines Vergleichs zwischen einer Anzahl und/oder einer mittleren Amplitude der Stoßimpulse über einer definierten Zeitdauer mit einem Referenzwert, wobei die Auswerteeinrichtung (13) vorzugsweise derart ausgebildet ist, dass sie ein Alarmsignal (A) ausgibt, wenn die Anzahl der Stoßimpulse und/oder die mittlere Amplitude über der definierten Zeitdauer den Referenzwert übersteigen.

14. Anordnung (10) nach einem der Ansprüche 8 bis 13, **dadurch gekennzeichnet, dass** die Auswerteeinrichtung (13) mit einem Conditioning-Monitoring-System (17) koppelbar ist.

15. Anordnung (10) nach einem der Ansprüche 8 bis 14, **gekennzeichnet durch** ein weiteres Signal-verarbeitungsmittel (22) zum Ermitteln eines Kennwertes (K) für eine bereits erfolgte oder gerade erfolgende Schädigung des Wälzlagers (1) aus dem ersten Sensorsignal (S), wobei die Auswerteeinrichtung (13) zusätzlich zum Ermitteln des Schädigungszustandes des Wälzlagers (1) unter Durchführung eines Vergleichs des Kennwertes (K) mit einem von der Drehzahl des Wälzlagers (1) abhängigen Referenzwert ausgebildet ist.

16. System (30) zum Ermitteln und/oder Überwachen des Zustands einer Maschine (31) mit mehr als zwei Wälzlagern (1, 1', 1''), **gekennzeichnet durch** zumindest zwei, insbesondere genau zwei, Anordnungen (10, 10') nach einem der Ansprüche 8 bis 15, wobei die Sensoren (11, 11') der Anordnungen (10, 10') an unterschiedlichen Stellen an oder in der Maschine (31) angebracht sind und wobei die Anzahl der Anordnungen (10, 10') kleiner ist als die Anzahl der Wälzlager (1, 1', 1'').

## Claims

1. Method for determining and/or monitoring the state of a roller bearing (1), wherein a sensor signal (S) in the form of a sound emission signal in a frequency band in the ultrasonic range is captured during the operation of the roller bearing (1), **characterised in that** shock pulses in the sensor signal (S) are determined for the purpose of detecting bearing currents.

2. Method according to claim 1, **characterised in that** shock pulses in a frequency range of 80 kHz to 150 kHz are determined.

3. Method according to claim 1 or 2, **characterised in that** shock pulses having a duration in the range of 1 µs to 10 ms are determined.

4. Method according to one of the claims 1 to 3, **characterised in that** shock pulses whose pulse rise time is shorter than their pulse fall time are determined.

5. Method according to one of the preceding claims, **characterised in that** the determined shock pulses are counted.

6. Method according to one of the preceding claims, **characterised in that** a number and/or an average amplitude of the shock pulses over a defined duration is determined and compared with a reference value, wherein an alarm signal (A) is preferably output if the number of shock pulses and/or the average amplitude over the defined duration exceeds the reference value.

7. Method according to one of the preceding claims, **characterised in that** a characteristic value (K) for damage already done or being done to the roller bearing (1) is also determined from the sensor signal (S) and a damage state of the roller bearing (1) is determined by performing a comparison with a reference value which is dependent on the rotational speed of the roller bearing, wherein the product of maximal value and effective value of the sensor signal (S) is preferably calculated for the purpose of determining the characteristic value (K).

8. Arrangement (10) for determining and/or monitoring the state of a roller bearing (1) during the operation thereof, having a sensor (11) for capturing a sensor signal (S) in the form of a sound emission signal in a frequency band in the ultrasonic range, **characterised in that** it comprises a signal processing facility (12) for determining shock pulses in the sensor signal (S) for the purpose of detecting bearing currents.

9. Arrangement (10) according to claim 8, **characterised in that** the signal processing facility (12) is so designed that shock pulses in a frequency range of 80 kHz to 150 kHz can be determined.

10. Arrangement (10) according to claim 8 or 9, **characterised in that** the signal processing facility (12) is so designed that shock pulses having a duration in the range of 1 µs to 10 ms can be determined.

11. Arrangement (10) according to one of the claims 8 to 10, **characterised in that** the signal processing facility (12) is so designed that shock pulses whose pulse rise time is shorter than their pulse fall time can be determined.

12. Arrangement (10) according to one of the claims 8 to 11, **characterised by** a counter (14) for counting the shock pulses which have been determined.

13. Arrangement (10) according to one of the claims 8 to 12, **characterised by** an analysis device (13) for performing a comparison between a number and/or an average amplitude of the shock pulses over a defined duration with a reference value, wherein the analysis device (13) is preferably so designed as to output an alarm signal (A) if the number of shock pulses and/or the average amplitude over the defined duration exceeds the reference value.

14. Arrangement (10) according to one of the claims 8 to 13, **characterised in that** the analysis device (13) can be coupled to a condition monitoring system (17).

15. Arrangement (10) according to one of the claims 8 to 14, **characterised by** a further signal processing facility (22) for determining from the first sensor signal (S) a characteristic value (K) for damage already done or being done to the roller bearing (1), wherein the analysis device (13) is additionally so designed as to determine the damage state of the roller bearing (1) by performing a comparison of the characteristic value (K) with a reference value which is dependent on the rotational speed of the roller bearing (1).

16. System (30) for determining and/or monitoring the state of a machine (31) having more than two roller bearings (1, 1', 1''), **characterised by** at least two, in particular exactly two, arrangements (10, 10') according to one of the claims 8 to 15, wherein the sensors (11, 11') of the arrangements (10, 10') are attached at different positions on or in the machine (31) and wherein the number of arrangements (10, 10') is smaller than the number of roller bearings (1, 1', 1").

## Revendications

1. Procédé de détermination et/ou de contrôle de l'état d'un roulement (1), dans lequel, lorsque le roulement (1) fonctionne, on détecte un signal (S) de capteur sous la forme d'un signal d'émission de sons dans une bande de fréquence dans le domaine ultrasonore,
**caractérisé en ce que** l'on détermine, pour la détection de courant de roulement, des impulsions de choc dans le signal (S) de capteur.

2. Procédé suivant la revendication 1,
**caractérisé en ce que** l'on détermine des impulsions de choc dans un domaine de fréquence de 80 kHz à 150 kHz.

3. Procédé suivant la revendication 1 ou 2,
**caractérisé en ce que** l'on détermine des impulsions de choc d'une durée allant de 1 µs à 10 ms.

4. Procédé suivant la revendication 1 à 3,
**caractérisé en ce que** l'on détermine des impulsions de choc pour lesquelles un temps de montée est plus petit qu'un temps de descente.

5. Procédé suivant l'une des revendications précédentes,
**caractérisé en ce que** l'on compte les impulsions de choc déterminées.

6. Procédé suivant l'une des revendications précédentes,
**caractérisé en ce que** l'on détermine un nombre et/ou une amplitude moyenne des impulsions de choc pendant une durée définie et on le compare à une valeur de référence, en émettant de préférence un signal (A) d'alerte si le nombre des impulsions de choc et/ou l'amplitude moyenne pendant la durée dépasse la valeur de référence.

7. Procédé suivant l'une des revendications précédentes,
**caractérisé en ce que** l'on détermine, à partir du signal (S) de capteur, en outre, une valeur (K) caractéristique d'un endommagement déjà effectué ou s'effectuant précisément du roulement et, en effectuant une comparaison avec une valeur de référence qui dépend de la vitesse de rotation du roulement, on détermine un état d'endommagement du roulement (1), le produit de la valeur maximum par la valeur efficace du signal (S) de capteur étant de préférence déterminé pour la détermination de la valeur (K) caractéristique.

8. Agencement (10) de détermination et/ou de contrôle de l'état d'un roulement (1) dans son fonctionnement, comprenant un capteur (11) de détection d'un signal (S) de capteur sous la forme d'un signal d'émission de sons dans une bande de fréquence dans le domaine ultrasonore, **caractérisé en ce qu'**il comprend, pour la détection de courant de roulement, un moyen (12) de traitement du signal pour la détermination d'impulsions de choc dans le signal (S) de capteur.

9. Agencement (10) suivant la revendication 8,
**caractérisé en ce que** le moyen (12) de traitement du signal est constitué de manière à pouvoir déterminer des impulsions de choc qui sont dans un domaine de fréquence allant de 80 kHz à 150 kHz.

10. Agencement (10) suivant la revendication 8 ou 9,
**caractérisé en ce que** le moyen (12) de traitement du signal est constitué de manière à pouvoir déterminer les impulsions de choc d'une durée allant de 1 µs à 10 ms.

11. Agencement (10) suivant l'une des revendications 8 à 10,
**caractérisé en ce que** le moyen (12) de traitement du signal est constitué de manière à pouvoir déterminer des impulsions de choc pour lesquelles un temps de montée est plus petit qu'un temps de descente.

12. Agencement (10) suivant l'une des revendications 8 à 11,
**caractérisé par** un compteur (14) pour compter les impulsions de choc déterminées.

13. Agencement (10) suivant l'une des revendications 8 à 12,
**caractérisé par** un dispositif (13) d'exploitation pour effectuer une comparaison entre un nombre et/ou une amplitude moyenne des impulsions de choc pendant une durée définie à une valeur de référence, le dispositif (13) d'exploitation étant constitué de préférence de façon à émettre un signal (A) d'alerte si le nombre des impulsions de choc et/ou l'amplitude moyenne pendant la durée définie dépasse la valeur de référence.

14. Agencement (10) suivant l'une des revendications 8 à 13,
**caractérisé en ce que** le dispositif (13) d'exploitation peut être couplé à un système (17) conditioning-monitoring.

15. Agencement (10) suivant l'une des revendications 8 à 14,
**caractérisé par** un autre moyen (22) de traitement du signal pour déterminer une valeur (K) caractéristique d'un endommagement ayant déjà eu lieu ou venant d'avoir lieu du roulement (1) à partir du premier signal (S) de capteur, le dispositif (13) d'exploitation étant constitué en outre pour la détermination de l'état d'endommagement du roulement (1) en effectuant une comparaison de la valeur (K) caractéristique à une valeur de référence qui dépend de la vitesse de rotation du roulement (1).

16. Système (30) de détermination et/ou de contrôle de l'état d'une machine (31) ayant plus de deux roulements (1, 1', 1") **caractérisé par** au moins deux, notamment exactement deux, agencements (10, 10') suivant l'une des revendications 8 à 15, les capteurs (11, 11') des agencements (10, 10') étant mis en des points différents dans ou sur la machine (31) et le nombre des agencements (10, 10') étant plus petit que le nombre des roulements (1, 1', 1").
